# EUROPEAN PATENT APPLICATION

(11) **EP 4 759 686 A1**
(43) Date of publication of application: **17.06.2026**
(21) Application number: 25222721.0
(22) Date of filing: 11.12.2025
(51) Int. Cl.: B62D 35/00, B62D 37/02

(54) **SPOILER FOR A MOTOR VEHICLE**

(30) Priority: 11.12.2024 IT 202400028167
(71) Applicant: FERRARI S.p.A., 41100 Modena (IT)
(72) Inventor: LUMINI, Sandro, 41100 MODENA (IT)
(74) Representative: Studio Torta S.p.A.

(57) **Abstract**

A spoiler (9, 9', 9") for a motor vehicle (1) is described, comprising a support structure (8); an aerodynamic surface (10) designed to interact, in use, with an air stream according to a first travel axis (X) so as to generate an aerodynamic force, and constrained to the support structure (8); an elastically deformable plate (15, 15'') constrained to the support structure (8); at least two airfoils (16a, 16b, 16c) defining said aerodynamic surface (10) and each fixed to the plate (15, 15''); an actuator (20) operatively connected to the plate (15, 15'') and capable of being operated to determine the elastic deformation of the plate (15, 15'') and consequently move the aerodynamic surface (10) between a first configuration, in which the aerodynamic surface (10) has a first angle of attack (α) and a second configuration in which the aerodynamic surface (10) has a second angle of attack (β) different from said first angle of attack (α).

## Description

### CROSS-REFERENCE TO RELATED APPLICATIONS

This patent application claims priority from Italian patent application no. 102024000028167, filed on December 11, 2024, the entire disclosure of which is incorporated herein by reference.

### TECHNICAL FIELD

The present invention relates to a spoiler for a motor vehicle, in particular a high-performance motor vehicle.

### CONTEXT

High-performance motor vehicles comprise, in a known way, a body with a spoiler arranged above the rear wheels.

In a known way, the spoiler has an airfoil configured to generate the following aerodynamic forces, after interaction with the air stream according to a normal direction of travel of the motor vehicle:
- a direct resistance parallel to the direction of travel and in the opposite direction to the direction of travel of the motor vehicle; and
- a downforce directed downwards.

In a known way, the resistance and the downforce generated by the spoiler increase as the angle of attack of the airfoil increases with respect to the air.

The downforce increases the overall load acting on the rear wheels and consequently allows a reduction in the braking spaces along a straight path and an increase in the speed of travel around a curve, with the same radius of curvature of said curve.

It is therefore desirable to configure the spoiler so that the relative angle of attack is sufficiently high to obtain a high downforce value.

For this purpose, it is known to manufacture spoilers with a high curvature and, therefore, with high angles of attack.

However, the increase in the angle of attack of the airfoil of the spoiler also causes an increase in the drag generated by the spoiler, reducing the maximum speed reachable and increasing the consumption levels of the vehicle.

There is a need in the sector to be able to increase the overall downforce of the motor vehicle during curved trajectories and during braking, without increasing the overall resistance in travel of the motor vehicle, using the lowest number of additional components possible.

### SUMMARY

The object of the present invention is to obtain a spoiler for a motor vehicle which allows at least one of the aforementioned needs to be satisfied.

The aforesaid object is achieved by the present invention, as it relates to a spoiler for a motor vehicle according to what is defined by claim 1.

### BRIEF DESCRIPTION OF THE DRAWINGS

For a better understanding of the present invention, three preferred embodiments are described below, by way of nonlimiting example and with reference to the appended drawings, in which:
- Figure 1 is a perspective view of a motor vehicle comprising a first embodiment of a spoiler manufactured according to the dictates of the present invention;
- Figure 2 shows a cross-section on an enlarged scale along the line II-II of Figure 1 of the spoiler of Figure 1 in a first operating configuration;
- Figure 3 is a cross-section on an enlarged scale along the line II-II of Figure 1 of the spoiler of Figure 1 in a second operating configuration;
- Figure 4 is a top view of the spoiler of Figures 1 to 3;
- Figure 5 is a rear view of the spoiler of Figure 1 in a third operating configuration;
- Figure 6 is a cross-section of a second embodiment of the spoiler of Figure 1 in the first operating configuration;
- Figure 7 is a cross-section of the spoiler of Figure 6 in the second operating configuration;
- Figure 8 shows a cross-section of a third embodiment of the spoiler of Figure 1 in the first operating configuration;
- Figure 9 shows a cross-section of the third embodiment of the spoiler in the second operating configuration; and
- Figure 10 is a top view of the third embodiment of the spoiler of Figures 8 and 9.

### DESCRIPTION OF EMBODIMENTS

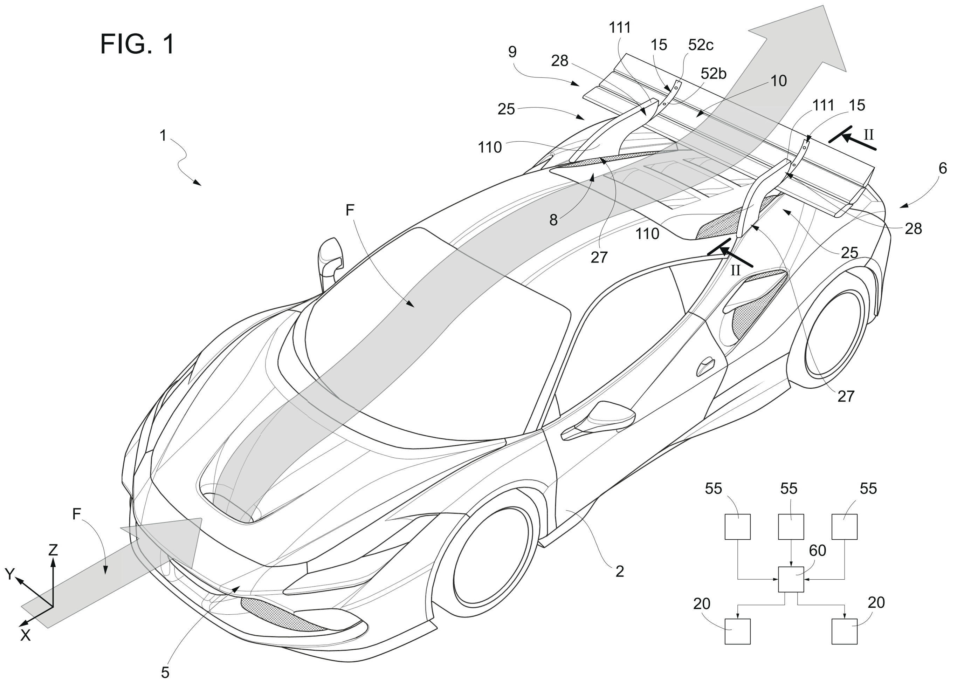

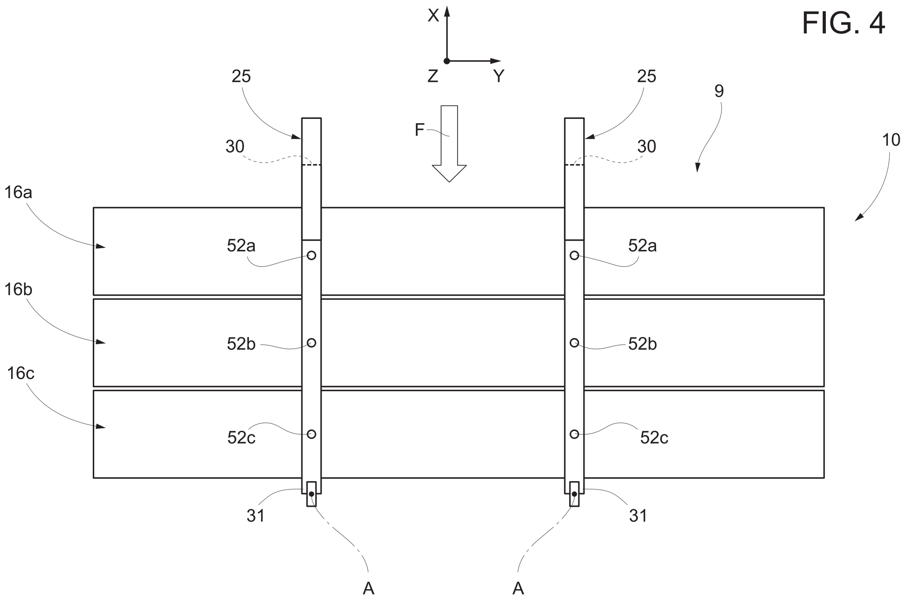

With reference to Figures 1 to 5, the number 1 indicates a motor vehicle comprising a body 2 defining a passenger compartment.

Furthermore, it is possible to define:
- a longitudinal axis X integral with the body 2, arranged, in use, horizontal and parallel to a normal direction of travel of the motor vehicle 1 indicated in Figure 1;
- a transverse axis Y integral with the body 2, arranged, in use, horizontal and orthogonal to the axis X; and
- an axis Z integral with the body 2, and arranged, in use, vertical and orthogonal to the axes X, Y.

The body 2 comprises, in turn, a front 5 and a rear 6 opposite to each other parallel to the axis X.

The motor vehicle 1 further comprises:
- a support structure 8 fixed to the body 2; and
- a spoiler 9 carried by the support structure 8 and defining an aerodynamic surface 10.

In particular, the support structure 8 is fixed to the rear 6 of the body 2.

The aerodynamic surface 10 has an angle of attack α, β relative to the axis X and, therefore, to the apparent direction of an air stream F relative to the motor vehicle 1 during normal travel of the motor vehicle 1 itself.

The aerodynamic surface 10 extends during motion of the motor vehicle 1, following an interaction with the air stream F and depending on the value of the angle of attack α, β:
- a direct downforce parallel to the axis Z and downwards; and
- a direct drag parallel to the axis X and according to a direction opposite to the direction of travel of the motor vehicle 1.

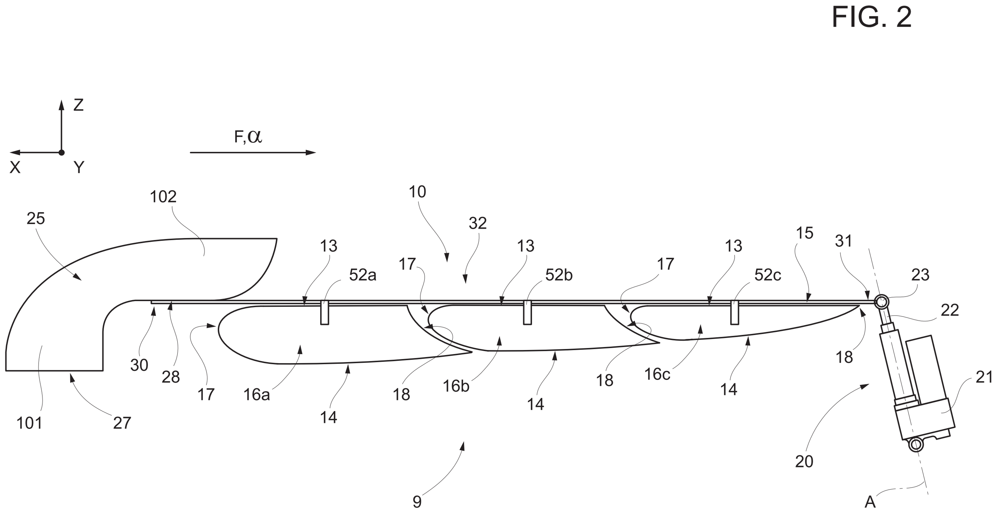

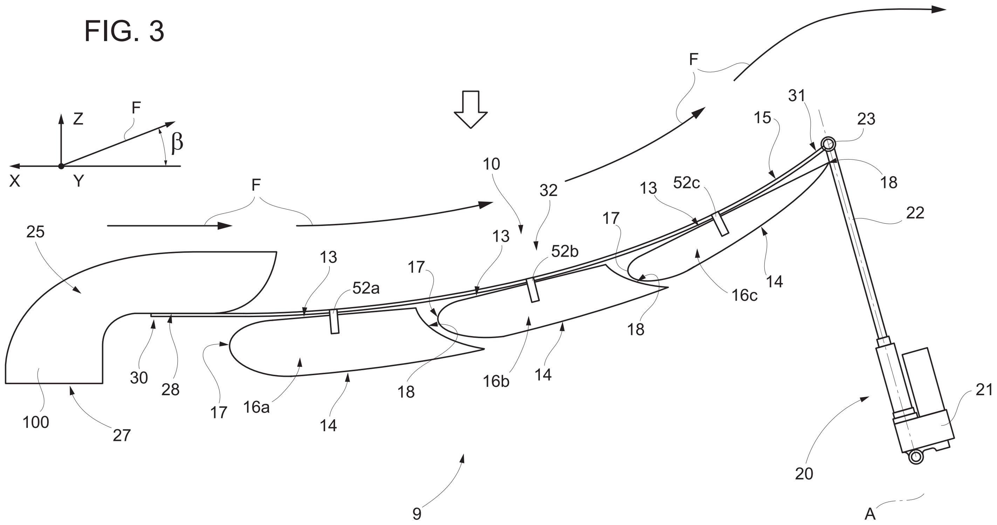

Advantageously, the spoiler 9 comprises:
- a pair of elastically deformable plates 15 fixed to the support structure 8;
- a plurality of airfoils 16a, 16b, 16c defining the aerodynamic surface 10 and each fixed to the plates 15; and
- a pair of actuators 20 operatively connected to respective plates 15 and each capable of being operated to determine the elastic deformation of the relative plate 15 and consequently move said aerodynamic surface 10 between a first configuration (Figure 2), in which said aerodynamic surface 10 has a an angle of attack α, and a second configuration (Figure 3), in which the aerodynamic surface 10 has an angle of attack β different from the angle of attack α.

In further detail, the support structure 8 comprises a pair of walls 25 fixed to the rear 6 of the body 2, elongated parallel to the axis X and distanced parallel to the axis Y.

The walls 25 project cantilevered at the back from the rear 6 and have a main vertical extension parallel to the axis Z.

Each wall 25 comprises, in particular (Figures 2 and 3):
- a respective section 100 with main vertical extension and projecting cantilevered from the rear 6 of the body 2; and
- a respective section 101 with main horizontal extension, and extending at the back starting from the corresponding sections 100.

Each section 100 comprises, in particular, a lower end 27 projecting cantilevered from the rear 6.

Each section 101 comprises, in particular, a lower end 28 opposite to the respective section 100.

The plates 15 are shaped as respective leaf springs having length parallel to the axis X and distanced from each other parallel to the axis Y.

Each plate 15 comprises, in further detail:
- a front end 30 operatively connected to a relative wall 25;
- a rear end 31, opposite to the end 30 and operatively connected to the relative actuator 20; and
- an intermediate portion 32 between the ends 30, 31.

In particular, the end 30 of each plate 15 is engaged at the end 27 of the wall 25.

There are three airfoils 16a, 16b, 16c in the case illustrated.

Each airfoil 16a, 16b, 16c comprises, in turn:
- a front leading edge 17 and a rear trailing edge 18 opposite to the leading edge 17; and
- an upper surface 13 and a lower surface 14 opposite to each other, and extending each between a respective leading edge 17 and a respective trailing edge 18.

The airfoils 16a, 16b, 16c are arranged in sequence between the wall 25 and the stem 22 of the relative actuator 20.

The airfoils 16a, 16b; 16b, 16c consecutive to each other are separated by respective cavities 50, 51 delimited above by the plates 15.

The upper surfaces 13 and the upper surfaces 14 of the airfoils 16a, 16b, 16b, 16c define the aerodynamic surface 10.

The upper surfaces 13 are flat in the case illustrated.

In particular, each cavity 50 (51) separates the leading edge 17 of the airfoil 16b (16c) from the trailing edge 18 of the airfoil 16a (16b).

In the case illustrated, the trailing edges 18 of the airfoils 16a, 16b are concave and house respective leading edges 17 of the airfoils 16b, 16c.

The airfoils 16a, 16b, 16c are arranged below the respective plates 15 and have respective upper surfaces 13 fixed to corresponding portions 52a, 52b, 52c of the portions 32 of the respective plates 15.

The portions 52a, 52b, 52c of each plate 15 are interposed in sequence between the respective ends 30, 31 of the corresponding plate 15.

The airfoils 16a, 16b, 16c have a length along the axis X and a width higher than the length along the axis Y, with reference to a non-deformed configuration of the plates 15.

In particular, the upper surfaces 13 of the airfoils 16a, 16b, 16c have a rectangular shape with longer sides parallel to the axis Y and shorter sides parallel to the axis X, with reference to a non-deformed configuration of the plates 15.

The plates 15 extend parallel to the axis X when non-deformed and are upward-bending around the axis Y when deformed by the actuators 20.

When the plates 15 are non-deformed, the aerodynamic surface 10 is arranged in the first configuration.

When the plates 15 are bent, in particular bent upwards, the aerodynamic surface 10 is arranged in the second configuration.

In the first configuration of the aerodynamic surface 10, the upper surfaces 13 are arranged orthogonal to the axis Z and aligned parallel to the axis X. In such first configuration, the angle of attack α of the aerodynamic surface 10 is substantially zero and the aerodynamic surface 10 has the minimum drag to travel parallel to the axis X.

In the second configuration of the aerodynamic surface 10, the upper surfaces 13 have respective lying planes transverse to the axis X and defining angles progressively increasing with the axis X proceeding from the walls 25 towards the actuators 20 parallel to the axis X.

In such second configuration, the angle of attack β of the aerodynamic surface 10 is higher than zero and the aerodynamic surface 10 generates the maximum downforce parallel to the axis Z.

Each actuator 20 comprises, in turn:
- a relative case 21 fixed to the rear 6 of the body 2; and
- a relative stem 22 sliding relative to the case 21 along an axis A orthogonal to the axis Y and inclined relative to the axes X, Z.

In particular, the stem 22 of each actuator 20 comprises a first end housed inside the relative case 21, and a second end 23 opposite to the first end. The second end 23 is arranged outside the relative case 21 and is fixed to the end 31 of the relative plate 15.

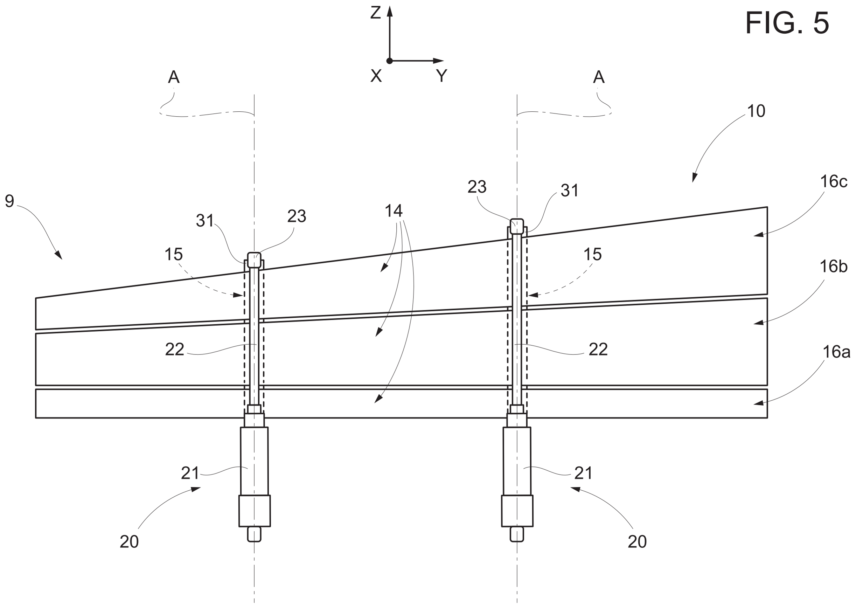

Each stem 22 is movable with respect to the relative case 21 between:
- a respective contracted position (Figure 2), in which the free length of the relative stem 22 with respect to the relative case 21 assumes a minimum value; and
- a respective extended position (Figures 3 and 5) in which the free length of the relative stem 22 with respect to the relative case 21 assumes a maximum value.

The motor vehicle 1 further comprises:
- a plurality of sensors 55 (only schematically illustrated in Figure 1) designed to detect respective significant quantities of the trajectory and the speed of the motor vehicle 1 itself; and
- a control unit 60 (also only schematically illustrated in Figure 1) programmed to receive, as an input, the quantities detected by the sensors 55.

The control unit 60 is operatively connected with the actuators 20 so as to cause sliding of the stems 22 relative to the corresponding cases 21 parallel to the relative axes H.

In greater detail, the control unit 60 is also programmed to:
- process, on the basis of the quantities detected by the sensors 55, a first control signal associated with the need to increase the downforce parallel to the axis Z acting on the motor vehicle 1 or a second control signal associated with the need to reduce the drag of the motor vehicle 1;
- command the actuators 20 to arrange the stems 22 in the respective extended positions, in the case of processing of the first signal; and
- command the actuators 20 to arrange the stems 22 in the respective contracted positions, in the case of processing of the first signal, in the case of processing of the second signal.

With reference to Figure 5, the control unit 60 is also programmed to:
- process, on the basis of the quantities detected by the sensors 55, a third command signal associated with the need to increase the downforce parallel to the axis Z acting on one side of the motor vehicle 1 with reference to the axis Y;
- command only one of the actuators 20 to arrange the relative stem 22 in the respective extended position; and
- command the other one of the actuators 20 to arrange the relative stem 22 in the respective contracted position.

Operation of the spoiler 9 is illustrated starting from the condition of Figure 2, in which the plates 15 are non-deformed, the aerodynamic surface 10 is in the first configuration, with which the substantially zero angle of attack α and the minimum drag parallel to the axis X correspond, and the stems 22 of the actuators 20 are in the respective contracted positions.

The control unit 60 receives from the sensors 55 the quantities detected and associated with the trajectory and the speed of the motor vehicle 1.

If it processes the second command signal associated with the need to increase the downforce parallel to the axis Z, the control unit 60 arranges the stems 22 of the actuators 20 in the respective extended positions.

Consequently, the plates 15 bend upwards around the axis Y, and arrange the aerodynamic surface 10 in the second configuration, in which the upper surfaces 13 lie on respective planes inclined relative to the axis X by corresponding angles progressively increasing proceeding from the walls 15 towards the corresponding actuators 20.

In such second configuration, the angle of attack β of the aerodynamic surface 10 is higher than zero and the downforce generated parallel to the axis Z is maximum.

When it processes the third command signal associated with the need to increase the downforce parallel to the axis Z acting on one side of the motor vehicle 1 with reference to the axis Y, the control unit 60 commands only one of the actuators 20 to arrange the relative stem 22 in the respective extended position and commands the other one of the actuators 20 to arrange the relative stem 22 in the respective contracted position. In this manner, the downforce from the side of the extended stem 22 increases (Figure 5).

If it processes the first command signal associated with the need to reduce the drag to travel of the motor vehicle parallel to the axis Z, the control unit 60 arranges the stems 22 of the actuators 20 in the respective contracted positions (Figure 2).

Consequently, the plates 15 return into the respective non-deformed positions, and the aerodynamic surface 10 assumes the first configuration, in which the upper surfaces 13 lie on respective planes orthogonal to the axis Z and are aligned parallel to the axis X.

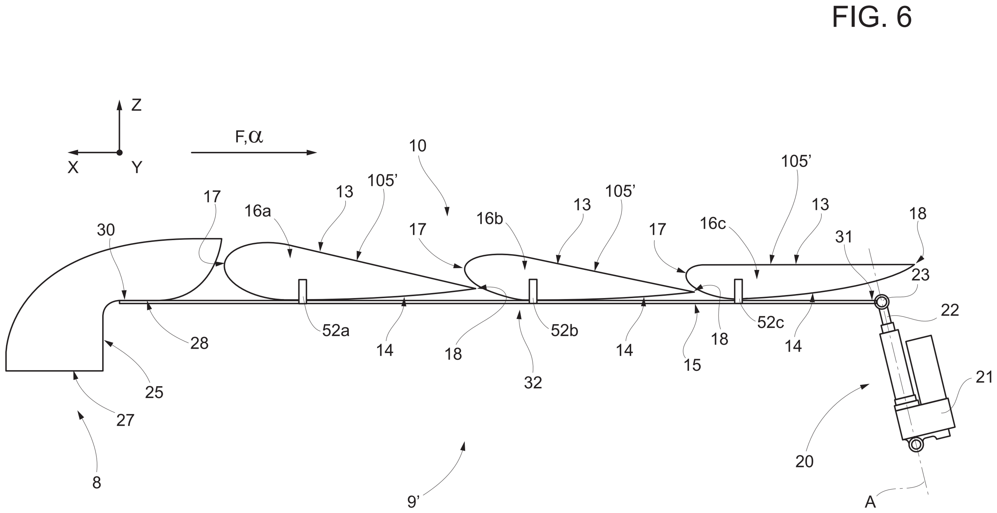

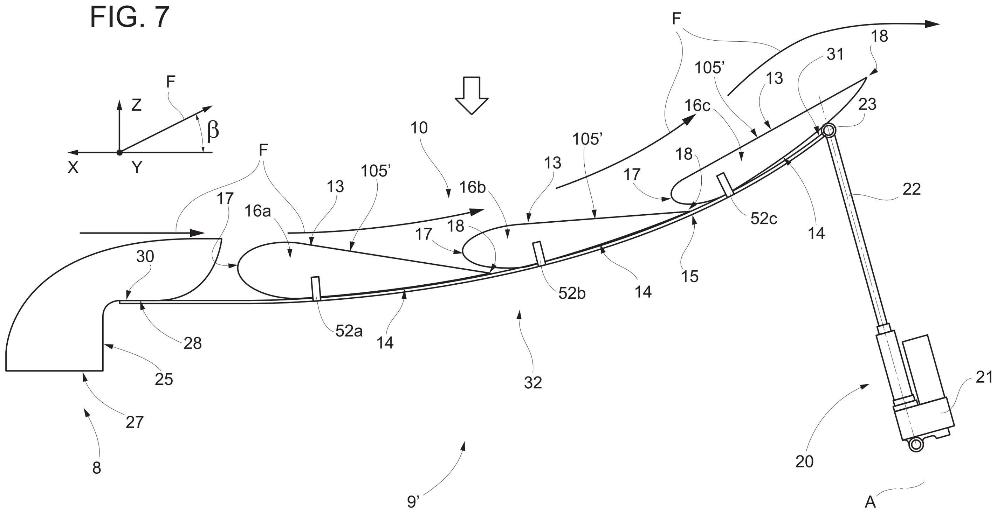

With reference to Figures 6 and 7, the number 9' indicates a spoiler according to a second embodiment of the invention.

The spoiler 9' is similar to the spoiler 9 and will be described below only insofar as it differs from it; identical or equivalent parts of the spoilers 9, 9' will be identified, where possible, with the same reference numbers.

In particular, the spoiler 9' differs from the spoiler 9 in that:
- the airfoils 16a, 16b, 16c are arranged above the respective plates 15;
- the lower surfaces 14 of the airfoils 16a, 16b, 16c are fixed to the respective plates 15 at respective portions 52a, 52b, 52c; and
- the upper surfaces 13 of the airfoils 16a, 16b have respective flat rear portions 105' arranged progressively closer to the respective plates 15 when the plates 15 themselves are non-deformed, proceeding from the walls 25 towards the corresponding actuators 20.

Operation of the spoiler 9' is similar to the one of the spoiler 9 and is therefore not described in detail.

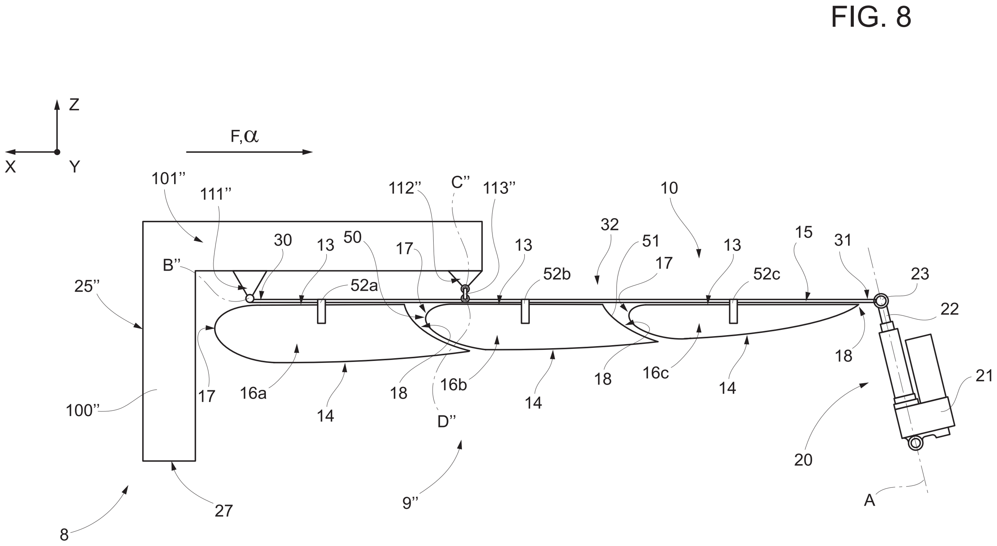

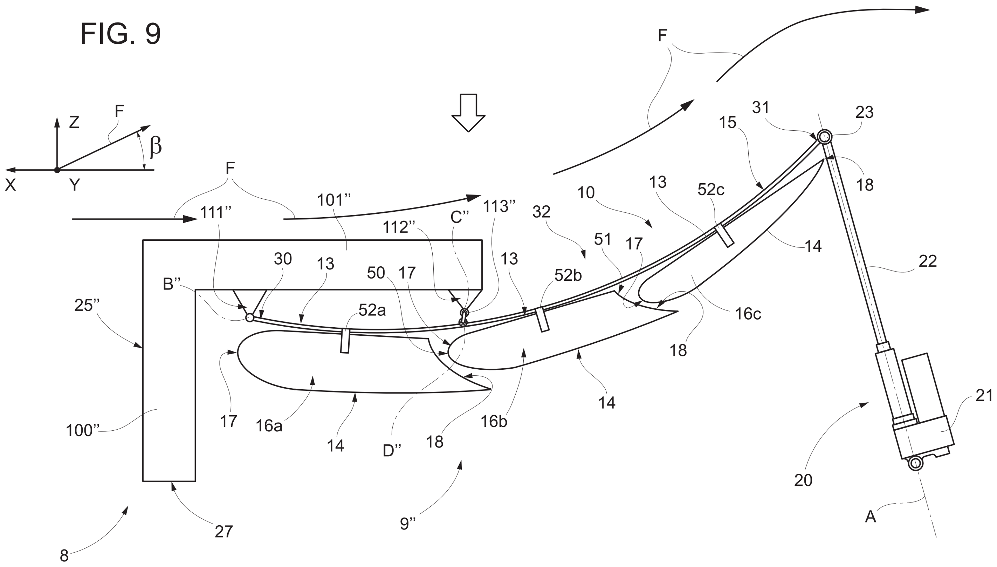

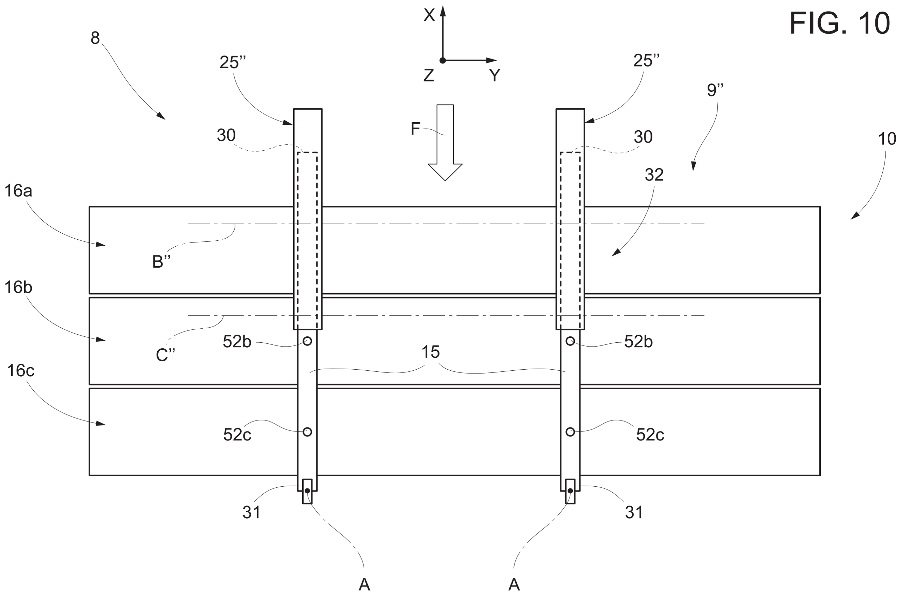

With reference to Figures 8 to 10, 9' indicates a spoiler according to a second embodiment of the invention.

The spoiler 9" is similar to the spoiler 9 and will be described below only insofar as it differs from it; identical or equivalent parts of the spoilers 9, 9" will be identified, where possible, with the same reference numbers.

The plates 15" of the spoiler 9'' differ from the plates 15 of the spoiler 9 in that:
- the respective ends 30 are hinged to corresponding first portions 111" of corresponding sections 101" around an axis B" parallel to the axis Y; and
- the respective portions 32 are connected to corresponding portions 112" of corresponding sections 101" by means of connecting rods 113".

In particular, the portions 111" are arranged in front of the portions 112".

Each connecting rod 113" is hinged to the respective portion 112" around a corresponding axis C" and to the respective portion 32 of the corresponding plate 15'' around an axis D".

The axes B'', C", D" are arranged above the airfoil 16a and the connecting rods 113" are arranged at the airfoil 16b, with reference to a non-deformed position of the plate 15.

In the case illustrated, the axes B", C", D" are parallel to each other and to the axis Y; the axis B" is arranged in front of the axes C", D", and the axis C" is arranged above the axis D".

Operation of the spoiler 9" is similar to the one of the spoiler 9 and is therefore not described in detail.

The advantages which may be obtained are evident from examination of the spoiler 9, 9', 9'' according to the present invention.

In particular, the spoiler 9, 9', 9" comprises:
- the elastically deformable plate 15, 15'' fixed to said support structure 8;
- a plurality of airfoils 16a, 16b, 16c defining the aerodynamic surface 10 and each fixed to the plates 15, 15"; and
- the actuator 20 capable of being operated to determine the elastic deformation of the plate 15, 15" and consequently move said aerodynamic surface 10 between the first configuration, in which said aerodynamic surface 10 has the angle of attack α, and the second configuration, in which the aerodynamic surface 10 has the angle of attack β different from the angle of attack α.

In this manner, the control unit selectively:
- moves the aerodynamic surface 10 into the second configuration with maximum angle of attack β and in which the maximum downforce is generated, arranging the stems 22 of the actuators 20 in the respective extended positions so as to bend the plates 15, 15"; and
- moves the aerodynamic surface 10 into the first configuration with substantially zero angle of attack α and in which the minimum drag is generated parallel to the axis X, arranging the stems 22 of the actuators 20 in the respective contracted positions so as to arrange the plates 15, 15" in the corresponding non-deformed positions.

It is possible to use the same aerodynamic surface 10 both to increase the downforce in curvilinear sections or, in the case of braking, both to reduce the drag in travel to increase the maximum speed or to reduce the consumption levels and consequently increase autonomy.

Thanks to the fact that the actuators 20 are selectively controllable independently from each other, it is possible to arrange the stem 22 of an actuator 20 in the respective extended portion and the stem 22 of the other actuator 20 in the respective contracted position. In this manner, the control unit 60 increases the downforce generated by one half of the aerodynamic surface, increasing the load only on the inner wheel to the curve, as illustrated in Figure 5.

In conclusion, it is clear that changes and variants can be made to the spoiler 9, 9', 9" manufactured according to the present invention without thus deviating from the scope of protection as defined by the claims.

In particular, the spoiler 9, 9', 9'' could comprise a single plate 15, 15'' and a single actuator 20 or a different number of airfoils 16a, 16b, 16c.

## Claims

1. A spoiler (9, 9', 9") for a motor vehicle (1), comprising:
- a support structure (8); and
- an aerodynamic surface (10), which is designed to interact, in use, with an air stream according to a first travel axis (X) so as to generate an aerodynamic force and is constrained to said support structure (8);
**characterized in that** it comprises:
- an elastically deformable plate (15, 15") constrained to said support structure (8);
- at least two airfoils (16a, 16b, 16c) defining said aerodynamic surface (10) and each fixed to said plate (15, 15"); and
- an actuator (20) operatively connected to said plate (15, 15") and capable of being operated to determine the elastic deformation of said plate (15, 15") and consequently move said aerodynamic surface (10) between a first configuration, in which said aerodynamic surface (10) has a first angle of attack (α) relative to an air stream (F) oriented, in use, parallel to said first axis (X), and a second configuration, in which said aerodynamic surface (10) has a second angle of attack (β) different from said first angle of attack (α).

2. The spoiler according to claim 1, **characterized in that** said airfoils (16a, 16b, 16c) each comprise:
- a leading edge (17) and a trailing edge (18) opposite one another and delimiting said airfoil (16a, 16b, 16c) at the front and at the back, respectively, with reference to a normal travel direction of said motor vehicle (1); and
- a respective lower surface (14) and a respective upper surface (13) defining said aerodynamic surface (10) and delimiting said airfoil (16a, 16b, 16c) at the top and at the bottom, respectively, with reference to said normal travel direction of said motor vehicle (1);
said lower and upper surfaces (14, 13) of said airfoils (16a, 16b, 16c) being arranged in sequence relative to one another.

3. The spoiler according to claim 2, **characterized in that** said airfoils (16a, 16b, 16c) are interposed between said support structure (8) and said actuator (20).

4. The spoiler according to claim 2 or 3, **characterized in that** said lower surfaces (14) and said upper surfaces (13) of two consecutive airfoils (16a, 16b; 16b, 16c) are spaced apart from one another.

5. The spoiler according to any one of the claims from 2 to 4, **characterized in that** at least one airfoil (16a, 16b, 16c) is fixed to said plate (15, 15") in the area of the relative lower surface (14) or of the relative upper surface (13).

6. The spoiler according to any one of the preceding claims, **characterized in that** said airfoils (16a, 16b, 16c) have a first length along said first axis (X) and a first width, which is greater than said first length, along a second axis (Y) orthogonal to said first axis (X) in a non-deformed configuration of said plate (15, 15").

7. The spoiler according to any one of the preceding claims, **characterized in that** said plate (15, 15") is shaped like a leaf spring;
said plate (15, 15") having a second length along said first axis (X) and a second width, which is smaller than said first length, along said second axis (Y) in a non-deformed configuration of the plate (15, 15").

8. The spoiler according to any one of the preceding claims, **characterized in that** said plate (15, 15") comprises:
- a first end (30) constrained to said support structure (8);
- a second free end (31) opposite said support structure (8) and operatively connected to said actuator (20); and
- a main portion (32), which is interposed between said first and second ends (30, 31) and to which said airfoils (16a, 16b, 16c) are fixed.

9. The spoiler according to claim 8, **characterized in that** said first end (30) of said plate (15) is attached to said support structure (8);
and/or **in that** said first end (30) of said plate (15") is hinged to said support structure (8) parallel to said second axis (Y) and said intermediate portion (32) of said plate (15") is constrained to said support structure (8) by means of a connecting rod (113");
said connecting rod (113") being hinged both to said support structure (8) and to the plate (15").

10. The spoiler according to any one of the preceding claims, **characterized in that** said first plate (15, 15") is non-deformed and has a lying plane orthogonal to said first and second axes (X, Y), when it is in said first configuration.

11. The spoiler according to any one of the preceding claims, **characterized in that** said actuator (20) comprises, in turn:
- a case (21) fixed to said body (2); and
- a stem (22) movable relative to said case (21) and fixed to said second end (31) of said plate (15, 15") opposite said support structure (8);
said stem (22) being movable relative to said case (21) parallel to a third axis (A), which is transverse to said first axis (X) and orthogonal to said second axis (Y).

12. The spoiler according to any one of the preceding claims, **characterized in that** it comprises:
- a pair of said plates (15, 15") spaced apart from one another along said second axis (Y); and
- a pair of said actuators (20) operatively connected to respective plates (15, 15") and capable of being operated independently of one another so as to determine a differential elastic deformation of said plates (15, 15").

13. A motor vehicle comprising:
- a body (2), which comprises, in turn, a front (5) and a rear (6) and to which said support structure (8) is fixed;
- a spoiler (9, 9', 9") according to any one of the preceding claims; and
- a control unit (60) programmed to receive, as an input, a first command associated with the fact that a reduction in the drag generated by said aerodynamic surface (10) was requested or a second command associated with the fact that an increase in the downforce generated by said aerodynamic surface (10) was requested;
said control unit (60) being operatively connected to said actuator (20) and programmed to:
- have said actuator (20) shift said at least one plate (15, 15") to said first configuration after having received said first command; and
have said actuator (20) shift said at least one plate (15, 15") to said second configuration after having received said second command.

14. The motor vehicle according to claim 13, **characterized in that** said support structure (8) is fixed to said rear (6) of said body (2).
